(19) Europäisches Patentamt
European Patent Office
Office européen des brevets

(11) Veröffentlichungsnummer : **0 261 160 B1**

# (12) EUROPÄISCHE PATENTSCHRIFT

(45) Veröffentlichungstag der Patentschrift : **06.03.91 Patentblatt 91/10**

(51) Int. Cl.$^5$ : **C07C 69/757**, C07C 67/293, C09K 19/30, C07C 255/31

(21) Anmeldenummer : **87901477.7**

(22) Anmeldetag : **07.03.87**

(86) Internationale Anmeldenummer : **PCT/EP87/00132**

(87) Internationale Veröffentlichungsnummer : **WO 87/05599 24.09.87 Gazette 87/21**

## (54) Alicyclische Verbindungen.

(30) Priorität : **14.03.86 DE 3608502**
**03.02.87 DE 3703145**

(43) Veröffentlichungstag der Anmeldung : **30.03.88 Patentblatt 88/13**

(45) Bekanntmachung des Hinweises auf die Patenterteilung : **06.03.91 Patentblatt 91/10**

(84) Benannte Vertragsstaaten : **CH DE LI**

(56) Entgegenhaltungen :
**GB-A- 1 325 056**
**US-A-38 381 72**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **WÄCHTLER, Andreas**
**Goethestr. 34**
**W-6103 Griesheim (DE)**
Erfinder : **EIDENSCHINK, Rudolf**
**Konrad-Adenauer-Strasse 1**
**W-6109 Muehltal (DE)**
Erfinder : **KRAUSE, Joachim**
**Samuel-Morse-Str. 14**
**W-6110 Dieburg (DE)**
Erfinder : **KURMEIER, Hans-Adolf**
**Hinter der Schule 3a**
**W-6104 Seeheim-Jugenheim (DE)**

EP 0 261 160 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft alicyclische Verbindungen der Formel I

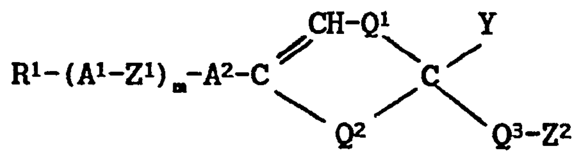

IV

worin

- $R^1$ Halogen oder Alkyl mit 2-10 C-Atomen, worin auch ein oder zwei nicht benachbarte $CH_2$–Gruppen durch O–Atome und/oder –CO–Gruppen und/oder –CO–O–Gruppen und/oder –CH=CH–Gruppen ersetzt sein können,
- $A^1$ unsubstituiertes oder ein- oder mehrfach durch Halogen und/oder $CH_3$-Gruppen substituiertes 1,4-Phenylen oder 1,4-Cyclohexylen,
- $Z^1$ $-CH_2CH_2-$, $-CH_2O-$, $-OCH_2-$ oder eine Einfachbindung,
- m 0, 1 oder 2,
- $A^2$ unsubstituiertes oder ein- oder mehrfach durch Halogen und/oder $CH_3$-Gruppen substituiertes 1,4-Phenylen,

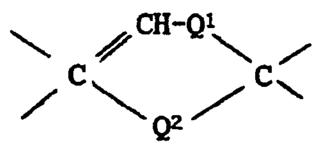

ein alicyclisches Fragment,

- $Z^2$ –COOR oder –CN,
- $Q^3$ Alkylen mit 1-15 C-Atomen, Alkyliden mit 2-15 C-Atomen oder eine Einfachbindung,
- Y H, CN oder R

  und
- R Alkyl mit 1-15 C-Atomen

bedeutet,

wobei $Q^2$ und $Q^3$ nicht beide gleichzeitig eine Einfachbindung bedeuten, sowie ein Verfahren zur Herstellung dieser Verbindungen.

In der US 3,838,172 ist zwar eine allgemeine Formel für Cyclohexenverbindungen beschrieben, die z.T. Substanzen umfaßt, die unter die vorliegende Formel IV fallen, es sind jedoch keinerlei Verbindungen explizit offenbart, die unter Formel IV fallen. Ferner gibt es in dieser Entgegenhaltung keinerlei Hinweise auf die Verwendung solcher Verbindungen als Komponenten flüssigkristalliner Phasen. Entgegenhaltung GB 1 325 056 beschreibt ähnliche Phenylcyclohexene, die jedoch von $R^1$ unterschiedliche Reste enthalten und stets als Cyclohexencarbonsäuren vorliegen.

Tertiäre Alkohole der Formel I

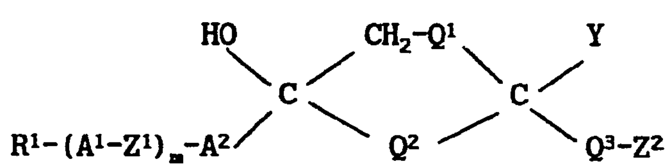

I

worin $R^1$, $A^1$, $Z^1$, m, $A^2$, Y, $Q^3$ und $Z^2$ die angegebenen Bedeutungen haben und

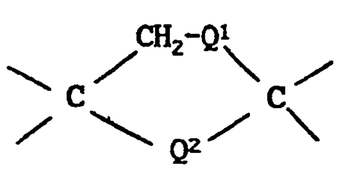

ein alicyclisches Fragment darstellt, die als Zwischenprodukte bei der Synthese der Verbindungen der Formel IV auftreten, sind für die Herstellung von flüssigkristallinen Verbindungen, wie z.B. den Verbindungen der Formel IV von großem Interesse.

Zur Herstellung von flüssigkristallinen Substanzen werden leicht zugängliche Zwischenprodukte benötigt, aus welchen mit möglichst wenigen Syntheseschritten die entsprechenden Substanzen mit flüssigkristallinen Eigenschaften erhalten werden können.

Aufgabe der vorliegenden Erfindung war es, neue Verbindungen, die flüssigkristalline Eigenschaften aufweisen, über entsprechend leicht synthetisierbare Zwischenprodukte für die Herstellung von Flüssigkristallen sowie ein Verfahren zu ihrer Herstellung zu finden.

Mit der Bereitstellung der alicyclischen Verbindungen der Formel IV sowie einem Verfahren zu deren Darstellung wurde die Aufgabe gelöst.

Die bisher bekannten Verfahren zur Herstellung von ähnlichen Verbindungen der Formel I bzw. IV führen alle zu unbefriedigenden Ergebnissen. Dafür sind vor allem schlechte Ausbeuten und z.T. schwer zugängliche Ausgangsverbindungen verantwortlich.

p-Substituierte Phenylcyclohexancarbonsäuren und deren Ester werden z.B. durch Umsetzung von Cyclohexen mit Acetyl-chlorid/$AlCl_3$ und mit Benzol und anschließendem Haloformabbau des Ketons zur Carbonsäure hergestellt, (beschrieben in J. Amer. Chem. Soc. 67, 1045 (1945), W.S. Johnson et al. und von Nenitzescu et al., Ann. 519 (260) 1935). Der Substituent in p-Stellung, z.B. $OCH_3$, muß dann über elektrophile aromatische Substitution (z.B. Nitrierung, Reduktion, Diazotierung, Einführung der OH-Gruppe und Methylierung) eingeführt werden, was ein sehr aufwendiger Weg ist.

Ein weiteres Beispiel beschreibt das Verfahren zur Herstellung von 4-[4-(trans-4-Alkylcyclohexyl) phenyl] cyclohexan-carbonsäuren (nach EP 90 671) durch Reduktion von 4-[trans-4-Alkylcyclohexyl]biphenyl-4-carbosäure mit metallischem Natrium in Isoamylalkohol. Die Nachteile dieses Verfahrens sind ein sehr hoher Verbrauch an Reduktionsmittel und relativ geringe Ausbeuten. Ebenfalls bekannt ist ein Verfahren zur Herstellung von Verbindungen der Formel I, bei dem entsprechende Grignardverbindungen mit Cyclohexanonen umgesetzt werden, so beschrieben in J. Org. Chem. 39, 2787.

Dabei treten jedoch häufig unerwünschte Nebenreaktionen (wie z.B. Aldolreaktionen zwischen den Carbonylverbindungen) auf.

Ähnliche Produkte wie die Verbindungen der Formel I sind z.B. auch beschrieben in der DE-PS 2 701 591. Dort werden 4-Alkylcyclohexanone umgesetzt mit aromatischen Grignard-Verbindungen.

Dieses Verfahren ist jedoch zur Herstellung der tertiären Alkohole der Formel I nicht möglich, da Grignard-Verbindungen sowohl die Ketogruppe am Cyclohexanon als auch die in p-Stellung vorhandene CN- bzw. Estergruppe angreifen würde. Ein solcher Substituent müßte bei Umsetzung mit Grignard-Verbindungen nachträglich wieder eingeführt werden.

Aufgabe der vorliegenden Erfindung war also auch ein Herstellungsverfahren für die Verbindungen der Formel IV über Zwischenprodukte der Formel I zu finden, das die beschriebenen Nachteile der bisherigen Verfahren nicht oder nur in geringem Maß aufweist.

Überraschenderweise wurde gefunden, daß zirkonium- oder titanorganische Verbindungen hervorragend zur Herstellung dieser Verbindungen geeignet sind.

Gegenstand der Erfindung sind somit die Verbindungen der Formel IV und ein Verfahren zur Herstellung dieser Verbindungen, dadurch gekennzeichnet, daß man eine Ketoverbindung der Förmel II

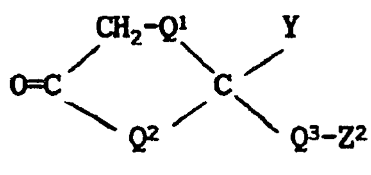

II

worin $Q^1$, $Q^2$, $Q^3$, Y, $Z^2$ und R die oben angegebene Bedeutung haben, mit einem entsprechenden Aryltitantrialkoxid oder Arylzirkoniumtrialkoxid umsetzt, und anschließend den intermediär entstehenden tertiären Alkohol der Formel I

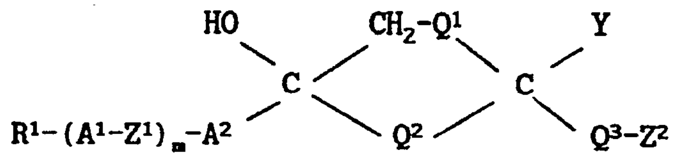

I

dehydratisiert.

Die Verbindungen der Formel I können allgemein als Zwischen-produkte für die Herstellung von Flüssigkristallen verwendet werden.

Der Einfachheit halber bedeuten im folgenden Phe eine unsubstituierte oder ein- oder mehrfach durch Halogen und/oder $CH_3$-Gruppen substituierte 1,4-Phenylengruppe, Cy eine unsubstituierte oder ein- oder mehrfach durch Halogen und/oder $CH_3$-Gruppen substituierte 1,4-Cycloherylengruppe und X die Gruppe

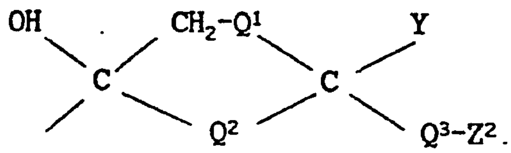

Die Verbindungen der Formel 1 umfassen dementsprechend die Verbindungen der Teilformel Ia (für m = 0), Ib bis Ic (für m = 1) und Id bis Ig (für m = 2) :

$R^1$–Phe–X Ia
$R^1$–$A^1$–$A^2$–X Ib
$R^1$–$A^1$–$Z^1$–$A^2$–X Ic
$R^1$–$A^1$–$A^1$–$A^2$–X Id
$R^1$–$A^1$–$Z^1$–$A^1$–$A^2$–X Ie
$R^1$–$A^1$–$A^1$–$Z^1$–$A^2$–X If
$R^1$–$A^1$–$Z^1$–$A^1$–$Z^1A^2$–X Ig

Die Verbindungen der Teilformel Ib umfassen vorzugsweise diejenigen der Teilformeln Iba und Ibb :

$R^1$–Phe–Phe–X Iba
$R^1$–Cy–Phe–X Ibb

Die Verbindungen der Teilformel Ic umfassen bevorzugt diejenigen der Teilformeln Ica bis Icf :

$R^1$–Phe–$CH_2CH_2$–Phe–Xca
$R^1$–Cy–$CH_2CH_2$–Phe–X Icb
$R^1$–Phe–$CH_2O$–Phe–X Icc
$R^1$–Cy–$CH_2O$–Phe–X Icd
$R^1$–Phe–$OCH_2$–Phe–X Ice
$R^1$–Cy–$OCH_2$–Phe–X Icf

Die Verbindungen der Teilformel Id umfassen bevorzugt diejenigen der Teilformeln Ida bis Idd :

$R^1$–Phe–Phe–Phe–XIda
$R^1$–Cy–Phe–Phe–X Idb
$R^1$–Phe–Cy–Phe–X Idc
$R^1$–Cy–Cy–Phe–X Idd

Die Verbindungen der Teilformel Ie umfassen vorzugsweise diejenigen der Teilformeln Iea bis Ied :

$R^1$–Phe–$Z^1$–Phe–Phe–XIea
$R^1$–Cy–$Z^1$–Phe–Phe–X Ieb
$R^1$–Phe–$Z^1$–Cy–Phe–X Iec
$R^1$–Cy–$Z^1$–Cy–Phe–X Ied

Die Verbindungen der Teilformel If umfassen bevorzugt diejenigen der Teilformeln Ifa bis Ifd :

$R^1$–Phe–Phe–$Z^1$–Phe–XIfa
$R^1$–Cy–Phe–$Z^1$–Phe–X Ifb
$R^1$–Phe–Cy–$Z^1$–Phe–X Ifc
$R^1$–Cy–Cy–$Z^1$–Phe–X Ifd

Die Verbindungen der Teilformel Ig umfassen bevorzugt diejenigen der Teilformel Iga bis Igd :

$R^1$–Phe–$Z^1$–Phe–$Z^1$–Phe–XIga
$R^1$–Cy–$Z^1$–Phe–$Z^1$–Phe–X Igb

$R^1$–Phe–$Z^1$–Cy–$Z^1$–Phe–X Igc

$R^1$–Cy–$Z^1$–Cy–$Z^1$–Phe–X Igd

In den vor- und nachstehenden Formeln und Teilformeln bedeutet $R^1$ vorzugsweise eine Alkylgruppe mit 2-10 C-Atomen, worin auch eine oder zwei nicht benachbarte $CH_2$–Gruppen durch O–Atome und/oder –CO–Gruppen und/oder –CO–O–Gruppen und/oder –CH=CH–Gruppen ersetzt sein können.

$A^2$ bedeutet vorzugsweise unsubstituiertes 1,4-Phenylen, ferner auch durch Halogen monosubstituiertes 1,4-Phenylen. Als Halogen kommt bevorzugt F, Cl oder Br, insbesondere F in Frage.

m bedeutet vorzugsweise 1 oder 2, insbesondere 1.

$Z^1$ hat in erster Linie die Bedeutung einer Einfachbindung, in zwei ter Linie bedeutet $Z^1$ $-CH_2CH_2-$, ferner auch $-OCH_2$-oder $-CH_2O-$.

A1 bedeutet vorzugsweise unsubstituiertes 1,4-Phenylen oder 1,4-Cyclohexylen. Falls diese Gruppen substituiert vorliegen, ist eine Monosubstitution durch F, Cl oder Br, insbesondere Monofluorsubstitution bevorzugt.

Das alicyclische Fragment

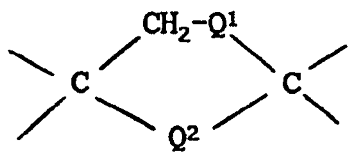

kann aus Monocyclen, Di- oder Bicyclen oder mehreren Ringen, auch ankondensierten Ringen, beliebiger Größe bestehen. Die folgenden alicyclischen Fragmente sind darunter ganz besonders bevorzugt :

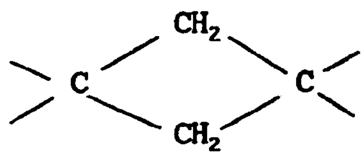

IIIa

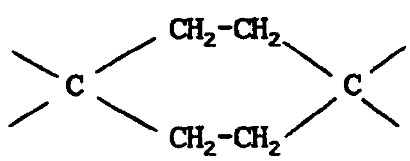

IIIb

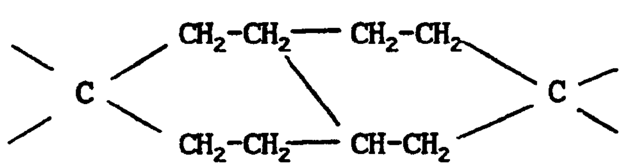

IIIc

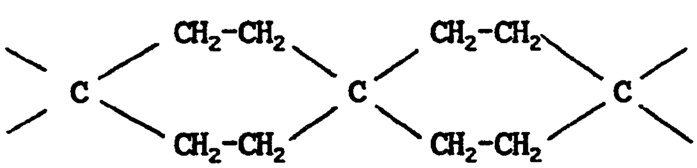

IIId

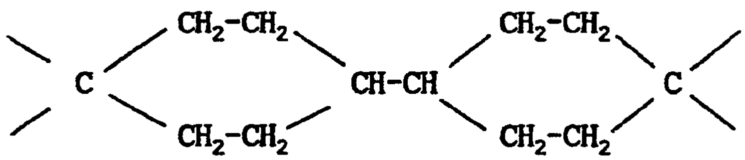

IIIe

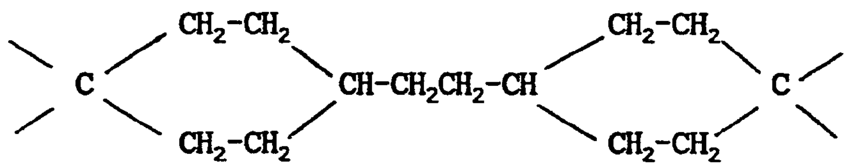

IIIf

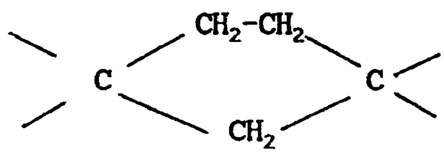

IIIg

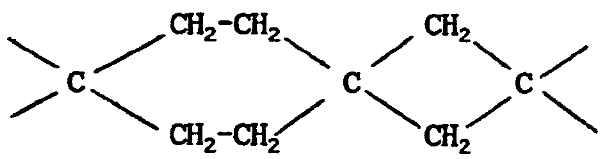

IIIh

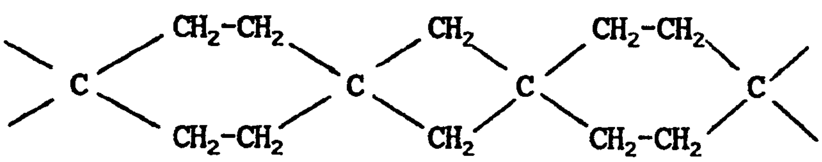

IIIi

$Q^3$ bedeutet in den vor- und nachstehenden Formeln Alkylen mit 1 bis 15 C-Atomen, vorzugsweise mit 1-10 C-Atomen, insbesondere mit 1-5 C-Atomen, und bedeutet demnach vorzugsweise Methylen, Ethylen, Propylen, Butylen, Pentylen, Hexylen, Heptylen, Octylen, Wonylen oder Decylen, oder auch Alkyliden mit 2-15 C-Atomen, vorzugsweise 2-7 C-Atomen, und bedeutet demanch bevorzugt Ethyliden, Propyliden, Butyliden, Pentyliden, Hexyliden oder Heptyliden, ferner auch Octyliden, Nonyliden oder Decyliden.

Ferner bedeutet $Q^3$ auch eine Einfachbindung, die besonders bevorzugt ist. $Q^2$ und $Q^3$ bedeuten jedoch nicht gleichzeitig eine Einfachbindung.

$Z^2$ bedeutet –COOR oder –CN, vorzugsweise eine Estergruppe.

R bedeutet Alkyl mit 1-15 C-Atomen, vorzugsweise mit 3-15 C-Atomen, insbesondere bevorzugt mit 5-15 C-Atomen.

Y bedeutet H, CN oder R, vorzugsweise H. R hat die oben gegebene Bedeutung.

In den vor- und nachstehenden Formeln bedeutet R bzw. $R^1$ vorzugsweise geradkettiges oder verzweigtes Alkyl mit 1-15 C-Atomen, bzw. mit 2-10 C-Atomen, bedeutet demnach bevorzugt Ethyl, Propyl, Butyl, Pentyl, Hexyl, Heptyl, Octyl, Nonyl oder Decyl, R ferner auch Methyl, Undecyl, Dodecyl, Tridecyl, Tetradecyl oder Pentadecyl. Bevorzugt sind auch verzweigte Reste wie Isopropyl, 2-Butyl, Isopentyl, 1-Methylpentyl, 2-Methylpentyl, 1-Methylhexyl oder 1-Methylheptyl. R1 bedeutet vorzugsweise auch Ethoxy, Propoxy, Butoxy, Pentoxy, Hexoxy, Heptory, Octoxy, Nonoxy oder Decoxy, ferner auch Methoxy, oder auch Isopropoxy, Isopentoxy, 2-Butoxy oder 1-Methylpentoxy. R in Y und COOR kann gleich oder verschieden sein.

Das erfindungsgemäße Verfahren geht von den leicht zugänglichen Arylhalogeniden aus. Diese werden nach bekannten Methoden in Grignard-Reagenzien überführt oder lithiiert, dann erfolgt die Umsetzung mit einem Chlortrialkylorthotitanat bzw. -zirkonat zum entsprechenden Aryltitantrialkoxid oder Arylzirkoniumtrialkoxid.

Diese Umsetzung erfolgt vorzugsweise in einem inerten Lösungsmittel, wie z.B. Tetrahydrofuran, Diethylether, Benzol, Toluol, Hexan u. a. oder in geeigneten Gemischen dieser Lösungsmittel und bei Temperaturen von –78°C bis 100°C, vorzugsweise bei –15°C bis 50°C.

Anschließend gibt man die entsprechende Ketoverbindung zu, ebenfalls in einem oben genannten inerten Lösungsmittel und bei den angegebenen Temperaturen. Die metallorganische Verbindung addiert sich dabei selektiv an die Ketogruppe (vgl. Angew. Chem. 95, 12 (1983)) zum entsprechenden Metallalkoholat, worin als Metall beispielsweise Magnesium, Lithium, Titan oder Zirkonium enthalten ist. Dieses Alkoholat wird dann auf übliche Weise in den entsprechenden tertiären Alkohol überführt, der leicht dehydratisiert werden kann. Die so erhaltenen Verbindungen der Formel I können zur Synthese von Flüssigkristallverbindungen verwendet werden und sind leicht zu den verschiedensten Endprodukten weiterverarbeitbar. Durch Hydrierung zu den entsprechend gesättigten Ringen, durch Dehydrierung zu aromatischen Verbindungen, durch Wasserabspaltung zu den erfindungsgemäßen Verbindungen der Formel IV

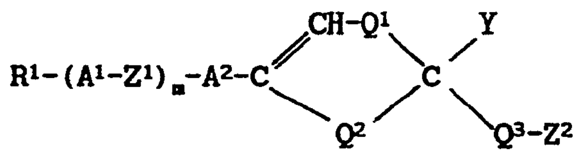

IV

und gegebenenfalls durch nachfolgende Hydrierung zu Verbindungen der Formel V

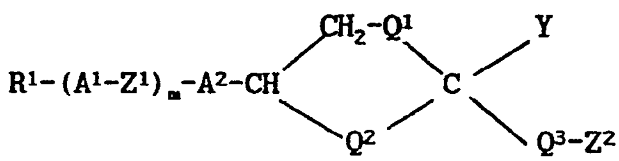

V

Ferner können entsprechende Ester ($Z^2$ = COOR) oder Nitrile zu den entsprechenden Säuren verseift werden und gegebenenfalls mit weiteren hingen verknüpft werden.

Es können auch noch weitere Substituenten in die Verbindungen der Formeln I, IV oder V eingeführt werden.

Es stehen somit viele Möglichkeiten offen, auf einfache Weise aus den tertiären Alkoholen der Formel I weitere flüssigkristalline Produkte herzustellen.

Als Ausgangsverbindungen werden Ketoverbindungen der Formel II und Arylhalogenide der Formel VI

$$R^1\text{–}(A^1\text{–}Z^1)_m\text{–}A^2\text{–Halogen} \quad \text{VI}$$

eingesetzt, worin $R^1$, $A^1$, $Z^1$, m und $A^2$ die in Formel IV angegebene Bedeutung besitzen und Halogen Fluor, Chlor, Jod oder Brom bedeutet. Vorzugsweise werden die entsprechenden Bromide ferner auch die Chloride oder Jodide eingesetzt.

Die Formeln VIa bis VIt stellen eine Gruppe von ganz besonders bevorzugten Ausgangsverbindungen dar :

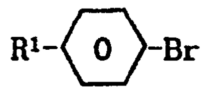 VIa

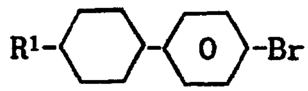 VIb

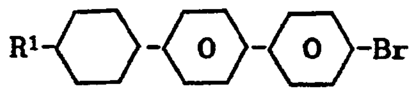 VIc

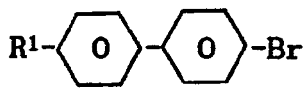 VId

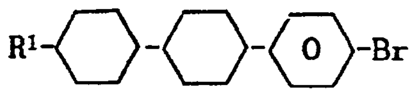 VIe

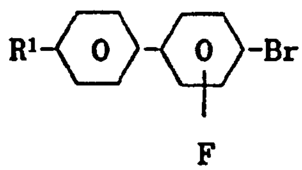 VIf

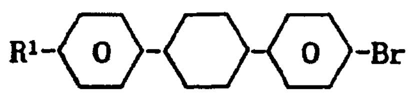 VIg

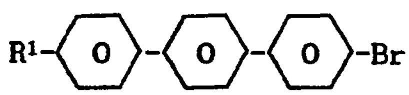 VIh

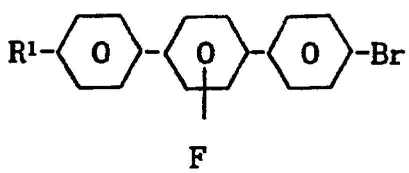 VIi

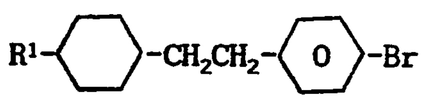 VIj

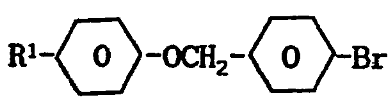 VIk

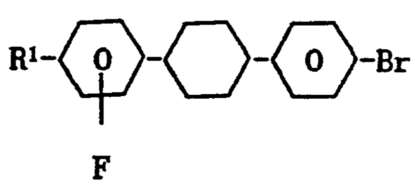 VIl

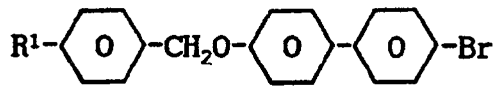

VIm

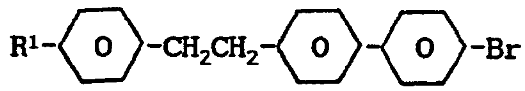

VIn

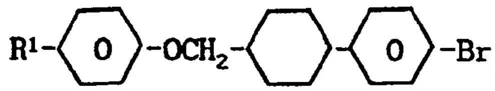

VIo

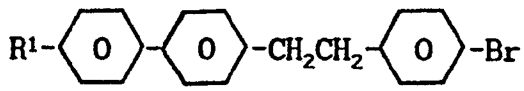

VIp

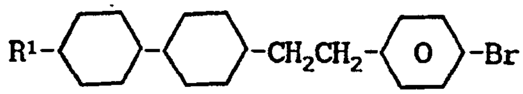

VIq

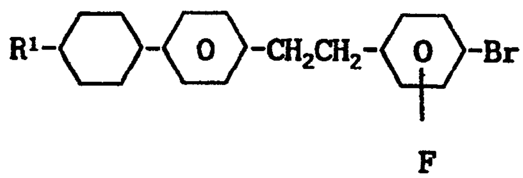

VIr

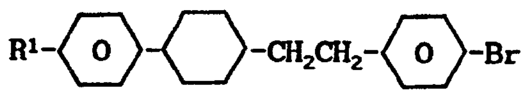

VIs

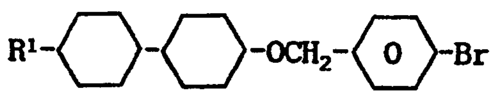

VIt

Als einsetzbare Ketoverbindungen kommen alle beliebigen cyclischen Ketoester oder Ketonitrile der Formel II in Frage :

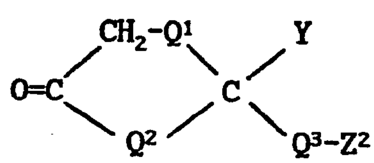

II

Dabei heban Y, $Q^3$ und $Z^2$ die angegebenen, bevorzugten Bedeutungen.

Für das alicyclische Fragment 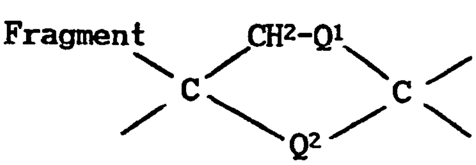

kommen debai alle beschriebenen Strukturen, insbesondere die bevorzugten der Formeln IIIa bis IIIi in Frage.

Als zirkonium- oder titanorganisches Reagenz werden vorzugsweise die Trialkoxy-chlorverbindungen, insbesondere das Chlortitan- bzw. Chlorzirkoniumtriisopropoxid, eingesetzt. Bevorzugt sind dabei die titanorganischen Verbindungen.

Das erfindungsgemäße Verfahren kann also auf alle beliebigen cyclischen Ketoester, mit Ausnahme von β-Ketoestern, Ketonitrile und die entsprechenden Arylhalogenide, die sich in eine metallorganische Verbindung überführen lassen, angewandt werden.

Die Verbindungen der Formel I sind als Zwischenprodukte für die Herstellung von flüssigkristallinen Verbindungen von großem Interesse.

Die als Ausgangsverbindungen eingesetzten Ketoverbindungen der Formel II sind z.T. bekannt, z.B. die Verbindungen VIIa oder VIIb, die in DE-OS 34 07 113 beschrieben sind :

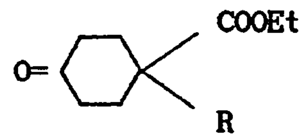

VIIa

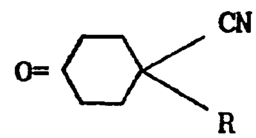

VIIb

Formel II umfaßt jedoch auch neue Verbindungen der Formel II′

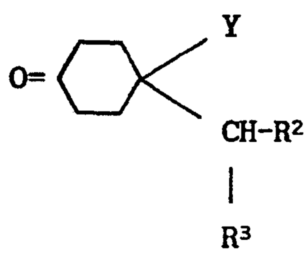

II′

worin $R^2$ Alkyl mit 2-15 C-Atomen bedeutet, Y die oben angegebene Bedeutung hat, und $R^3$ CN oder $COOR^4$ ist, die ebenfalls Gegenstand der Erfindung sind. $R^4$ bedeutet darin Alkyl mit 3-15, vorzugsweise mit 5-15 C-Atomen.

Die Verbindungen der Formel II′ können nach allgemein bekannten Methoden der organischen Chemie hergestellt werden.

Die folgenden Beispiele sollen die Erfindung näher erläutern, ohne sie zu begrenzen. Fp = Schmelzpunkt. Vor-und nachstehend bedeuten Prozentangaben Gewichtsprozent ; die Temperaturen sind in Grad Celsius angegeben.

## Beispiel 1

Zu einem Grignard-Reagenz, hergestellt aus 0,1 m 4-Pentyl-brombenzol in 100 ml THF und 0,11 m Magnesiumspänen in 20 ml THF, gibt man bei 40° eine Lösung von 0,1 m $TiCl[OCH(CH_3)_2]_3$ in 50 ml THF und rührt 30 Minuten. Dann werden 0,1 m Cyclohexanon-4-carbonsäureethylester in 50 ml THF bei 30-40° zugegeben und das Reaktionsgemisch wird mehrere Stunden gerührt. Der entstandene tertiäre Alkohol kann entweder auf übliche Weise isoliert werden oder ohne Isolierung gleich anschließend dehydratisiert werden.

Nach Zugebe von 500 ml $H_2O$ und 50 ml Salzsäure, Extraktion mit 250 ml TBM, Waschen und Eindampfen, wird die Substanz mittels Chromatographie an Kieselgel (in Toluol, Eluieren mit Aceton) gereinigt, anschließend mit Ethanol/Salzsäure erhitzt, eingedampft, gewaschen, abgesaugt und man erhält 4-(4-Pentylphenyl)-cyclohexencarbonsäureethylester durch Umkristallisation.

Analog werden über die entsprechenden tertiären Alkohole folgende dehydratisierte Produkte hergestellt :

4-(4-Chlorphenyl)-cyclohexencarbonsäuremethylester
4-(4-Chlorphenyl)-cyclohexencarbonsäureethylester
4-(4-Chlorphenyl)-cyclohexencarbonsäurepropylester

4-(4-Chlorphenyl)-cyclohexencarbonsäurebutylester
4-(4-Chlorphenyl)-cyclohexencarbonsäurepentylester
4-(4-Chlorphenyl)-cyclohexencarbonsäurehexylester
4-(4-Chlorphenyl)-cyclohexencarbonsäureisopropylester
4-(4-Chlorphenyl)-cyclohexencarbonsäure-2-methylpentylester
4-(4-Chlorphenyl)-cyclohexencarbonsäure-1-methylheptylester
4-(4-Chlorphenyl)-cyclohexencarbonsäureoctylester
4-(4-Pentylphenyl)-cyclohexencarbonsäureethylester
4-(4-Pentylphenyl)-cyclohexencarbonsäurepropylester
4-(4-Pentylphenyl)-cyclohexencarbonsäurebutylester
4-(4-Pentylphenyl)-cyclohexencarbonsäurepentylester
4-(4-Pentylphenyl)-cyclohexencarbonsäurehexylester
4-(4-Pentylphenyl)-cyclohexencarbonsäureisopropylester
4-(4-Pentylphenyl)-cyclohexencarbonsäure-2-methylpentylester
4-(4-Pentylphenyl)-cyclohexencarbonsäure-1-methylheptylester
4-(4-Pentylphenyl)-cyclohexencarbonsäureoctylester
4-[4-(trans-4-Propylcyclohexyl)phenyl]-cyclohexencarbonsäuremethylester
4-[4-(trans-4-Propylcyclohexyl)phenyl]-cyclohexencarbonsäureethylester
4-[4-(trans-4-Propylcyclohexyl)phenyl]-cyclohexencarbonsäurepropylester
4-[4-(trans-4-Propylcyclohexyl)phenyl]-cyclohexencarbonsäurebutylester
4-[4-(trans-4-Propylcyclohexyl)phenyl]-cyclohexencarbonsäurepentylester
4-[4-(trans-4-Propylcyclohexyl)phenyl]-cyclohexencarbonsäurehexylester
4-[4-(trans-4-Propylcyclohexyl)phenyl]-cyclohexencarbonsäureisopropylester
4-[4-(trans-4-Propylcyclohexyl)phenyl]-cyclohexencarbonsäure-2-methylpentylester
4-[4-(trans-4-Propylcyclohexyl)phenyl]-cyclohexencarbonsäure-1-methylheptylester
4-[4-(trans-4-Propylcyclohexyl)phenyl]-cyclohexencarbonsäureoctylester
4-[4'-(trans-4-Pentylcyclohexyl)biphenyl-4-yl]-cyclohexencarbonsäuremethylester
4-[4'-(trans-4-Propylcyclohexyl)biphenyl-4-yl]-cyclohexencarbonsäureethylester
4-[4'-(trans-4-Propylcyclohexyl)biphenyl-4-yl]-cyclohexencarbonsäurepropylester
4-[4'-(trans-4-Propylcyclohexyl)biphenyl-4-yl]-cyclohexencarbonsäurebutylester
4-[4'-(trans-4-Propylcyclohexyl)biphenyl-4-yl]-cyclohexencarbonsäurepentylester
4-[4'-(trans-4-Propylcyclohexyl)biphenyl-4-yl]-cyclohexencarbonsäurehexylester
4-[4'-(trans-4-Propylcyclohexyl)biphenyl-4-yl]-cyclohexencarbonsäureisopropylester
4-[4'-(trans-4-Propylcyclohexyl)biphenyl-4-yl]-cyclohexencarbonsäure-2-methylpentylester
4-[4'-(trans-4-Propylcyclohexyl)biphenyl-4-yl]-cyclohexencarbonsäure-1-methylheptylester
4-[4'-(trans-4-Propylcyclohexyl)biphenyl-4-yl]-cyclohexencarbonsäureoctylester
4-(4'-Pentoxybiphenyl-4-yl)-cyclohexencarbonsäuremethylester
4-(4'-Pentoxybiphenyl-4-yl)-cyclohexencarbonsäureethylester
4-(4'-Pentoxybiphenyl-4-yl)-cyclohexencarbonsäurepropylester
4-(4'-Pentoxybiphenyl-4-yl)-cyclohexencarbonsäurebutylester
4-(4'-Pentoxybiphenyl-4-yl)-cyclohexencarbonsäurepentylester
4-(4'-Pentoxybiphenyl-4-yl)-cyclohexencarbonsäurehexylester
4-(4'-Pentoxybiphenyl-4-yl)-cyclohexencarbonsäureisopropylester
4-(4'-Pentoxybiphenyl-4-yl)-cyclohexencarbonsäure-2-methylpentylester
4-(4'-Pentoxybiphenyl-4-yl)-cyclohexencarbonsäure-1-methylheptylester
4-(4'-Pentoxybiphenyl-4-yl)-cyclohexencarbonsäureoctylester
6-(4-Pentylphenyl)-1,2,3,4,5,8,9,10-octahydronaphthalin-2-carbonsäuremethylester
6-(4-Pentylphenyl)-1,2,3,4,5,8,9,10-octahydronaphthalin-2carbonsäureethylester
6-(4-Pentylphenyl)-1,2,3,4,5,8,9,10-octahydronaphthalin-2-carbonsäurepropylester
6-(4-Pentylphenyl)-1,2,3,4,5,8,9,10-octahydronaphthalin-2-carbonsäurebutylester
6-(4-Pentylphenyl)-1,2,3,4,5,8,9,10-octahydronaphthalin-2-carbonsäurepentylester
6-(4-Pentylphenyl)-1,2,3,4,5,8,9,10-octahydronaphthalin-2-carbonsäurehexylester
6-(4-Pentylphenyl)-1,2,3,4,5,8,9,10-octahydronaphthalin-2-carbonsäureisopropylester
6-(4-Pentylphenyl)-1,2,3,4,5,8,9,10-octahydronaphthalin-2-carbonsäure-2-methylpentylester
6-(4-Pentylphenyl)-1,2,3,4,5,8,9,10-octahydronaphthalin-2-carbonsäure-1-methylheptylester
6-(4-Pentylphenyl)-1,2,3,4,5,8,9,10-octahydronaphthalin-2-carbonsäureoctylester

Beispiel 2

Unter Ausschluß von Luftsauerstoff und Feuchtigkeit gibt man bei −15°C zu 462 g 4-Brom-4′-n-octyloxybiphenyl in 1,4 l Toluol und 150 ml THF 788 ml einer 1,6 molaren Lösung von Butyllithium in n-Hexan. Nach ca. 15 Minuten Rühren gibt man ebenfalls bei −15°C 313 g Chlortriisopropylorthotitanat in 380 ml Toluol, dem man 40 ml THF zugesetzt hat.

Nach weiteren 15 Minuten Rühren gibt man bei −15°C 228 g Cyclohexanoncarbonsäureethylester in 600 ml Toluol zu und rührt unter langsamem Erwärmen auf Raumtemperatur über Nacht. Anschließend gibt man zu dem Reaktionsgemisch zügig 2 l 1n HCl. Das gesamte Reaktionsgemisch wird anschließend über eine mit einer trockenen Celite-Schicht bedeckte Nutsche filtriert. Die organische Phase des Filtrats wird abgetrennt, getrocknet und eingeengt. Man nimmt den Rückstand in Toluol auf und trennt mit einer Kieselgelsäule mit Toluol die unpolaren Nebenprodukte ab. Anschließend wird der 1-Hydroxy-1-(4-octyloxybiphenyl-4′-yl)-cyclohexan-4-carbonsäureethylester mit Methanol oder Aceton von der Säule gewaschen und durch Eindampfen isoliert.

Analog werden hergestellt:

1-Hydroxy-1-(4-octyloxybiphenyl-4′-yl)-cyclohexan-4-carbonsäuremethylester
1-Hydroxy-1-(4-octyloxybiphenyl-4′-yl)-cyclohexan-4-carbonsäurepropylester
1-Hydroxy-1-(4-octyloxybiphenyl-4′-yl)-cyclohexan-4-carbonsäurebutylester
1-Hydroxy-1-(4-octyloxybiphenyl-4′-yl)-cyclohexan-4-carbonsäurepentylester
1-Hydroxy-1-(4-octyloxybiphenyl-4′-yl)-cyclohexan-4-carbonsäurehexylester
1-Hydroxy-1-(4-octyloxybiphenyl-4′-yl)-cyclohexan-4-carbonsäureheptylester
1-Hydroxy-1-(4-octyloxybiphenyl-4′-yl)-cyclohexan-4-carbonsäureoctylester
1-Hydroxy-1-(4-heptyloxybiphenyl-4′-yl)-cyclohexan-4-carbonsäuremethylester
1-Hydroxy-1-(4-heptyloxybiphenyl-4′-yl)-cyclohexan-4-carbonsäureethylester
1-Hydroxy-1-(4-heptyloxybiphenyl-4′-yl)-cyclohexan-4-carbonsäurepropylester
1-Hydroxy-1-(4-heptyloxybiphenyl-4′-yl)-cyclohexan-4-carbonsäurebutylester
1-Hydroxy-1-(4-heptyloxybiphenyl-4′-yl)-cyclohexan-4-carbonsäurepentylester
1-Hydroxy-1-(4-heptyloxybiphenyl-4′-yl)-cyclohexan-4-carbonsäurehexylester
1-Hydroxy-1-(4-heptyloxybiphenyl-4′-yl)-cyclohexan-4-carbonsäureheptylester
1-Hydroxy-1-(4-heptyloxybiphenyl-4′-yl)-cyclohexan-4-carbonsäureoctylester
1-Hydroxy-1-(4-hexyloxybiphenyl-4′-yl)-cyclohexan-4-carbonsäuremethylester
1-Hydroxy-1-(4-hexyloxybiphenyl-4′-yl)-cyclohexan-4-carbonsäureethylester
1-Hydroxy-1-(4-hexyloxybiphenyl-4′-yl)-cyclohexan-4-carbonsäurepropylester
1-Hydroxy-1-(4-hexyloxybiphenyl-4′-yl)-cyclohexan-4-carbonsäurebutylester
1-Hydroxy-1-(4-hexyloxybiphenyl-4′-yl)-cyclohexan-4-carbonsäurepentylester
1-Hydroxy-1-(4-hexyloxybiphenyl-4′-yl)-cyclohexan-4-carbonsäurehexylester
1-Hydroxy-1-(4-hexyloxybiphenyl-4′-yl)-cyclohexan-4-carbonsäureheptylester
1-Hydroxy-1-(4-hexyloxybiphenyl-4′-yl)-cyclohexan-4-carbonsäureoctylester
1-Hydroxy-1-(4-pentyloxybiphenyl-4′-yl)-cyclohexan-4-carbonsäuremethylester
1-Hydroxy-1-(4-pentyloxybiphenyl-4′-yl)-cyclohexan-4-carbonsäureethylester
1-Hydroxy-1-(4-pentyloxybiphenyl-4′-yl)-cyclohexan-4-carbonsäurepropylester
1-Hydroxy-1-(4-pentyloxybiphenyl-4′-yl)-cyclohexan-4-carbonsäurebutylester
1-Hydroxy-1-(4-pentyloxybiphenyl-4′-yl)-cyclohexan-4-carbonsäurepentylester
1-Hydroxy-1-(4-pentyloxybiphenyl-4′-yl)-cyclohexan-4-carbonsäurehexylester
1-Hydroxy-1-(4-pentyloxybiphenyl-4′-yl)-cyclohexan-4-carbonsäureheptylester
1-Hydroxy-1-(4-pentyloxybiphenyl-4′-yl)-cyclohexan-4-carbonsäureoctylester
1-Hydroxy-1-(4-butyloxybiphenyl-4′-yl)-cyclohexan-4-carbonsäuremethylester
1-Hydroxy-1-(4-butyloxybiphenyl-4′-yl)-cyclohexan-4-carbonsäureethylester
1-Hydroxy-1-(4-butyloxybiphenyl-4′-yl)-cyclohexan-4-carbonsäurepropylester
1-Hydroxy-1-(4-butyloxybiphenyl-4′-yl)-cyclohexan-4-carbonsäurebutylester
1-Hydroxy-1-(4-butyloxybiphenyl-4′-yl)-cyclohexan-4-carbonsäurepentylester
1-Hydroxy-1-(4-butyloxybiphenyl-4′-yl)-cyclohexan-4-carbonsäurehexylester
1-Hydroxy-1-(4-butyloxybiphenyl-4′-yl)-cyclohexan-4-carbonsäureheptylester
1-Hydroxy-1-(4-butyloxybiphenyl-4′-yl)-cyclohexan-4-carbonsäureoctylester
1-Hydroxy-1-(4-propyloxybiphenyl-4′-yl)-cyclohexan-4-carbonsäuremethylester
1-Hydroxy-1-(4-propyloxybiphenyl-4′-yl)-cyclohexan-4-carbonsäureethylester
1-Hydroxy-1-(4-propyloxybiphenyl-4′-yl)-cyclohexan-4-carbonsäurepropylester
1-Hydroxy-1-(4-propyloxybiphenyl-4′-yl)-cyclohexan-4-carbonsäurebutylester

1-Hydroxy-1-(4-propyloxybiphenyl-4′-yl)-cyclohexan-4-carbonsäurepentylester
1-Hydroxy-1-(4-propyloxybiphenyl-4′-yl)-cyclohexan-4-carbonsäurehexylester
1-Hydroxy-1-(4-propyloxybiphenyl-4′-yl)-cyclohexan-4-carbonsäureheptylester
1-Hydroxy-1-(4-propyloxybiphenyl-4′-yl)-cyclohexan-4-carbonsäureoctylester
1-Hydroxy-1-(4-ethoxybiphenyl-4′-yl)-cyclohexan-4-carbonsäuremethylester
1-Hydroxy-1-(4-ethoxybiphenyl-4′-yl)-cyclohexan-4-carbonsäureethylester
1-Hydroxy-1-(4-ethoxybiphenyl-4′-yl)-cyclohexan-4-carbonsäurepropylester
1-Hydroxy-1-(4-ethoxybiphenyl-4′-yl)-cyclohexan-4-carbonsäurebutylester
1-Hydroxy-1-(4-ethoxybiphenyl-4′-yl)-cyclohexan-4-carbonsäurepentylester
1-Hydroxy-1-(4-ethoxybiphenyl-4′-yl)-cyclohexan-4-carbonsäurehexylester
1-Hydroxy-1-(4-ethoxybiphenyl-4′-yl)-cyclohexan-4-carbonsäureheptylester
1-Hydroxy-1-(4-ethoxybiphenyl-4′-yl)-cyclohexan-4-carbonsäureoctylester
1-Hydroxy-1-(4-octyloxyphenyl)-cyclohexan-4-carbonsäuremethylester
1-Hydroxy-1-(4-octyloxyphenyl)-cyclohexan-4-carbonsäureethylester
1-Hydroxy-1-(4-octyloxyphenyl)-cyclohexan-4-carbonsäurepropylester
1-Hydroxy-1-(4-octyloxyphenyl)-cyclohexan-4-carbonsäurebutylester
1-Hydroxy-1-(4-octyloxyphenyl)-cyclohexan-4-carbonsäurepentylester
1-Hydroxy-1-(4-octyloxyphenyl)-cyclohexan-4-carbonsäurehexylester
1-Hydroxy-1-(4-octyloxyphenyl)-cyclohexan-4-carbonsäureheptylester
1-Hydroxy-1-(4-octyloxyphenyl)-cyclohexan-4-carbonsäureoctylester
1-Hydroxy-1-(4-heptyloxyphenyl)-cyclohexan-4-carbonsäuremethylester
1-Hydroxy-1-(4-heptyloxyphenyl)-cyclohexan-4-carbonsäureethylester
1-Hydroxy-1-(4-heptyloxyphenyl)-cyclohexan-4-carbonsäurepropylester
1-Hydroxy-1-(4-heptyloxyphenyl)-cyclohexan-4-carbonsäurebutylester
1-Hydroxy-1-(4-heptyloxyphenyl)-cyclohexan-4-carbonsäurepentylester
1-Hydroxy-1-(4-heptyloxyphenyl)-cyclohexan-4-carbonsäurehexylester
1-Hydroxy-1-(4-heptyloxyphenyl)-cyclohexan-4-carbonsäureheptylester
1-Hydroxy-1-(4-heptyloxyphenyl)-cyclohexan4-carbonsäureoctylester
1-Hydroxy-1-(4-hexyloxyphenyl)-cyclohexan-4-carbonsäure methylester
1-Hydroxy-1-(4-hexyloxyphenyl)-cyclohexan-4-carbonsäureethylester
1-Hydroxy-1-(4-hexyloxyphenyl)-cyclohexan-4-carbonsäurepropylester
1-Hydroxy-1-(4-hexyloxyphenyl)-cyclohexan-4-carbonsäurebutylester
1-Hydroxy-1-(4-hexyloxyphenyl)-cycloheran-4-carbonsäurepentylester
1-Hydroxy-1-(4-hexyloryphenyl)-cyclohexan-4-carbonsäurehexylester
1-Hydroxy-1-(4-hexyloxyphenyl)-cyclohexan-4-carbonsäureheptylester
1-Hydroxy-1-(4-hexyloxyphenyl)-cyclohexan-4-carbonsäureoctylester
1-Hydroxy-1-(4-pentyloxyphenyl)-cyclohexan-4-carbonsäuremethylester
1-Hydroxy-1-(4-pentyloxyphenyl)-cyclohexan-4-carbonsäureethylester
1-Hydroxy-1-(4-pentyloxyphenyl)-cyclohexan-4-carbonsäurepropylester
1-Hydroxy-1-(4-pentyloxyphenyl)-cyclohexan-4-carbonsäurebutylester
1-Hydroxy-1-(4-pentyloxyphenyl)-cyclohexan-4-carbonsäurepentylester
1-Hydroxy-1-(4-pentyloxyphenyl)-cyclohexan-4-carbonsäurehexylester
1-Hydroxy-1-(4-pentyloxyphenyl)-cyclohexan-4-carbonsäureheptylester
1-Hydroxy-1-(4-pentyloxyphenyl)-cyclohexan-4-carbonsäureoctylester
1-Hydroxy-1-(4-butyloxyphenyl)-cyclohexan-4-carbonsäuremethylester
1-Hydroxy-1-(4-butyloxyphenyl)-cyclohexan-4-carbonsäureethylester
1-Hydroxy-1-(4-butyloxyphenyl)-cyclohexan-4-carbonsäurepropylester
1-Hydroxy-1-(4-butyloxyphenyl)-cyclohexan-4-carbonsäurebutylester
1-Hydroxy-1-(4-butyloxyphenyl)-cyclohexan-4-carbonsäurepentylester
1-Hydroxy-1-(4-butyloxyphenyl)-cyclohexan-4-carbonsäurehexylester
1-Hydroxy-1-(4-butyloxyphenyl)-cyclohexan-4-carbonsäureheptylester
1-Hydroxy-1-(4-butyloxyphenyl)-cyclohexan-4-carbonsäureoctylester
1-Hydroxy-1-(4-propyloxyphenyl)-cycloheran-4-carbonsäuremethylester
1-Hydroxy-1-(4-propyloxyphenyl)-cyclohexan-4-carbonsäureethylester
1-Hydroxy-1-(4-propyloxyphenyl)-cyclohexan-4-carbonsäurepropylester
1-Hydroxy-1-(4-propyloxyphenyl)-cyclohexan-4-carbonsäurebutylester
1-Hydroxy-1-(4-propyloxyphenyl)-cyclohexan-4-carbonsäurepentylester
1-Hydroxy-1-(4-propyloxyphenyl)-cyclohexan-4-carbonsäurehexylester

1-Hydroxy-1-(4-propyloxyphenyl)-cyclohexan-4-carbonsäureheptylester
1-Hydroxy-1-(4-propyloxyphenyl)-cyclohexan-4-carbonsäureoctylester
1-Hydroxy-1-(4-ethoxyphenyl)-cyclohexan-4-carbonsäuremethylester
1-Hydroxy-1-(4-ethoxyphenyl)-cyclohexan-4-carbonsäureethylester
1-Hydroxy-1-(4-ethoxyphenyl)-cyclohexan-4-carbonsäurepropylester
1-Hydroxy-1-(4-ethoxyphenyl)-cyclohexan-4-carbonsäurebutylester
1-Hydroxy-1-(4-ethoxyphenyl)-cyclohexan-4-carbonsäurepentylester
1-Hydroxy-1-(4-ethoxyphenyl)-cyclohexan-4-carbonsäurehexylester
1-Hydroxy-1-(4-ethoxyphenyl)-cyclohexan-4-carbonsäureheptylester
1-Hydroxy-1-(4-ethoxyphenyl)-cyclohexan-4-carbonsäureoctylester
1-Hydroxy-1-(4-octylphenyl)-cyclohexan-4-carbonsäuremethylester
1-Hydroxy-1-(4-octylphenyl)-cyclohexan-4-carbonsäureethylester
1-Hydroxy-1-(4-octylphenyl)-cyclohexan-4-carbonsäurepropylester
1-Hydroxy-1-(4-octylphenyl)-cyclohexan-4-carbonsäurebutylester
1-Hydroxy-1-(4-octylphenyl)-cyclohexan-4-carbonsäurepentylester
1-Hydroxy-1-(4-octylphenyl)-cyclohexan-4-carbonsäurehexylester
1-Hydroxy-1-(4-octylphenyl)-cyclohexan-4-carbonsäureheptylester
1-Hydroxy-1-(4-octylphenyl)-cyclohexan-4-carbonsäureoctylester
1-Hydroxy-1-(4-heptylphenyl)-cyclohexan-4-carbonsäuremethylester
1-Hydroxy-1-(4-heptylphenyl)-oyclohexan-4-carbonsäureethylester
1-Hydroxy-1-(4-heptylphenyl)-cyclohexan-4-carbonsäurepropylester
1-Hydroxy-1-(4-heptylphenyl)-cyclohexan-4-carbonsäurebutylester
1-Hydroxy-1-(4-heptylphenyl)-cyclohexan-4-carbonsäurepentylester
1-Hydroxy-1-(4-heptylphenyl)-cyclohexan-4-carbonsäurehexylester
1-Hydroxy-1-(4-heptylphenyl)-cyclohexan-4-carbonsäureheptylester
1-Hydroxy-1-(4-heptylphenyl)-cyclohexan-4-carbonsäureoctylester
1-Hydroxy-1-(4-hexylphenyl)-cyclohexan-4-carbonsäuremethylester
1-Hydroxy-1-(4-hexylphenyl)-cyclohexan-4-carbonsäureethylester
1-Hydroxy-1-(4-hexylphenyl)-cyclohexan-4-carbonsäurepropylester
1-Hydroxy-1-(4-hexylphenyl)-cyclohexan-4-carbonsäurebutylester
1-Hydroxy-1-(4-hexylphenyl)-cycloheran-4-carbonsäurepentylester
1-Hydroxy-1-(4-hexylphenyl)-cyclohexan-4-carbonsäurehexylester
1-Hydroxy-1-(4-hexylphenyl)-cyclohexan-4-carbonsäureheptylester
1-Hydroxy-1-(4-hexylphenyl)-cyclohexan-4-carbonsäureoctylester
1-Hydroxy-1-(4-pentylphenyl)-cycloheran-4-carbonsäuremethylester
1-Hydroxy-1-(4-pentylphenyl)-cyclohexan-4-carbonsäureethylester
1-Hydroxy-1-(4-pentylphenyl)-cyclohexan-4-carbonsäurepropylester
1-Hydroxy-1-(4-pentylphenyl)-cyclohexan-4-carbonsäurebutylester
1-Hydroxy-1-(4-pentylphenyl)-cyclohexan-4-carbonsäure-pentylester
1-Hydroxy-1-(4-pentylphenyl)-cyclohexan-4-carbonsäurehexylester
1-Hydroxy-1-(4-pentylphenyl)-cyclohexan-4-carbonsäureheptylester
1-Hydroxy-1-(4-pentylphenyl)-cyclohexan-4-carbonsäureoctylester
1-Hydroxy-1-(4-butylphenyl)-cyclohexan-4-carbonsäuremethylester
1-Hydroxy-1-(4-butylphenyl)-cyclohexan-4-carbonsäureethylester
1-Hydroxy-1-(4-butylphenyl)-cyclohexan-4-carbonsäurepropylester
1-Hydroxy-1-(4-butylphenyl)-cyclohexan-4-carbonsäurebutylester
1-Hydroxy-1-(4-butylphenyl)-cyclohexan-4-carbonsäurepentylester
1-Hydroxy-1-(4-butylphenyl)-cyclohexan-4-carbonsäurehexylester
1-Hydroxy-1-(4-butylphenyl)-cyclohexan-4-carbonsäureheptylester
1-Hydroxy-1-(4-butylphenyl)-cyclohexan-4-carbonsäureoctylester
1-Hydroxy-1-(4-propylphenyl)-cycloheran-4-carbonsäuremethylester
1-Hydroxy-1-(4-propylphenyl)-cycloheran-4-carbonsäureethylester
1-Hydroxy-1-(4-propylphenyl)-cyclohexan-4-carbonsäurepropylester
1-Hydroxy-1-(4-propylphenyl)-cyclohexan-4-carbonsäurebutylester
1-Hydroxy-1-(4-propylphenyl)-cyclohexan-4-carbonsäurepentylester
1-Hydroxy-1-(4-propylphenyl)-cyclohexan-4-carbonsäurehexylester
1-Hydroxy-1-(4-propylphenyl)-cyclohexan-4-carbonsäureheptylester
1-Hydroxy-1-(4-propylphenyl)-cyclohexan-4-carbonsäureoctylester

1-Hydroxy-1-(4-ethylphenyl)-cyclohexan-4-carbonsäuremethylester
1-Hydroxy-1-(4-ethylphenyl)-cyclohexan-4-carbonsäureethylester
1-Hydroxy-1-(4-ethylphenyl)-cyclohexan-4-carbonsäurepropylester
1-Hydroxy-1-(4-ethylphenyl)-cyclohexan-4-carbonsäurebutylester
1-Hydroxy-1-(4-ethylphenyl)-cyclohexan-4-carbonsäurepentylester
1-Hydroxy-1-(4-ethylphenyl)-cyclohexan-4-carbonsäurehexylester
1-Hydroxy-1-(4-ethylphenyl)-cyclohexan-4-carbonsäureheptylester
1-Hydroxy-1-(4-ethylphenyl)-cyclohexan-4-carbonsäureoctylester

## Ansprüche

1. Alicyclische Verbindungen der Formel IV

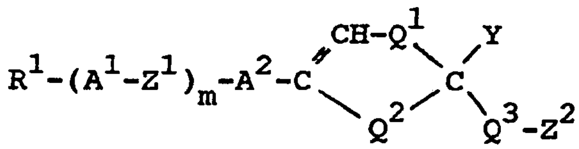

IV

worin

- $R^1$ Halogen oder Alkyl mit 2-10 C-Atomen, worin auch ein oder zwei nicht benachbarte $CH_2$–Gruppen durch O–Atome und/oder –CO–Gruppen und/oder –CO–O–Gruppen und/oder –CH=CH–Gruppen ersetzt sein können,
- $A^1$ unsubstituiertes oder ein- oder mehrfach durch Halogen und/oder $CH_3$-Gruppen substituiertes 1,4-Phenylen oder 1,4-Cyclohexylen,
- $Z^1$ $-CH_2CH_2-$, $-CH_2O-$, $-OCH_2-$ oder eine Einfachbindung,
- m 0, 1 oder 2,
- $A^2$ unsubstituiertes oder ein- oder mehrfach durch Halogen und/oder $CH_3$-Gruppen substituiertes 1,4-Phenylen,

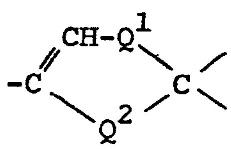

ein alicyclisches Fragment,

- $Z^2$ – COOR oder –CN,
- $Q^3$ Alkylen mit 1-15 C-Atomen, Alkyliden mit 2-15 C-Atomen oder eine Einfachbindung,
- Y H, CN oder R und
- R Alkyl mit 1-15 C-Atomen bedeutet,

wobei $Q^2$ und $Q^3$ nicht beide gleichzeitig eine Einfachbindung bedeuten.

2. Verbindungen nach Anspruch 1, worin m = Ø.

3. Verbindungen nach Anspruch 1, dadurch gekennzeichnet, daß das alicyclische Fragment ein Cyclohexenring bedeutet.

4. Verbindungen nach Anspruch 1, worin $A^2$ ein durch Fluor substituiertes 1,4-Phenylen ist.

5. Verbindungen nach Anspruch 1, worin Y H und $Z^2$ –COOR bedeuten.

6. Verfahren zur Herstellung von Verbindungen der Formel IV nach Anspruch 1, dadurch gekennzeichnet, daß man eine Verbindung der Formel II

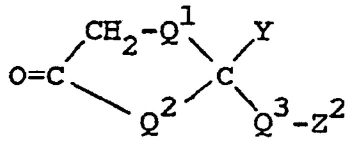

II

mit einem entsprechenden Aryltitantrialkoxid oder Arylzirkoniumtrialkoxid umsetzt und anschließend den intermediär entstehenden tertiären Alkohol der Formel I

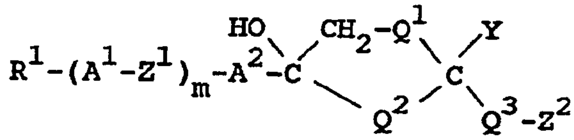

I

dehydratisiert, wobei in den Formeln I und II Y, $Z^2$, $Q^3$, $A^2$, m, $Z^1$, $A^1$ und $R^1$ die in Anspruch 1 angegebene Bedeutung haben und

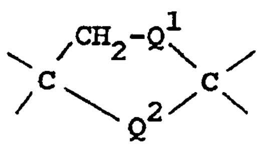

ein alicyclisches Fragment darstellt.

## Claims

1. Alicyclic compounds of the formula IV

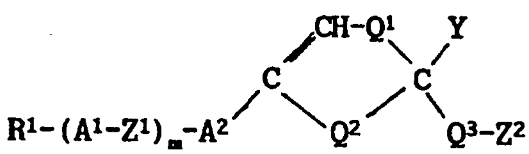

IV

wherein

- $R^1$ is halogen or alkyl which has 2-10 C atoms and in which one or two non-adjacent $CH_2$ groups can be replaced by O atoms and/or –CO– groups and/or –CO–O– groups and/or –CH=CH– groups,
- $A^1$ is 1,4-phenylene which is unsubstituted or monosubstituted or polysubstituted by halogen and/or $CH_3$ groups, or 1,4-cycloherylene,
- $Z^1$ is $-CH_2CH_2-$, $-CH_2O-$, $-OCH_2-$ or a single bond,
- m is 0, 1 or 2,
- $A^2$ is 1,4-phenylene which is unsubstituted or monosubstituted or polysubstituted by halogen and/or $CH_3$ groups,

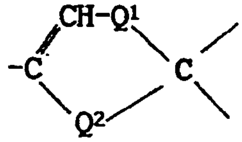

is an alicyclic fragment,

- $Z^2$ is –COOR or –CN,
- $Q^3$ is alkylene having 1-15 C atoms, alkylidene having 2-15 C atoms or a single bond,
- Y is H, CN or R

and

R is alkyl having 1-15 C atoms, and

$Q^2$ and $Q^3$ are not both simultaneously a single bond.

2. Compounds according to Claim 1, where m = Ø

3. Compounds according to Claim 1, characterized in that the alicyclic fragment is cyclohexene.

4. Compounds according to Claim 1, wherein $A^2$ is 1,4-phenylene, which is substituted by fluorine.

5. Compounds according to Claim 1, wherein Y is H and $Z^2$ is –COOR

6. Process for the preparation of compounds of the formula IV, according to Claim 1, characterized in that a compound of the formula II

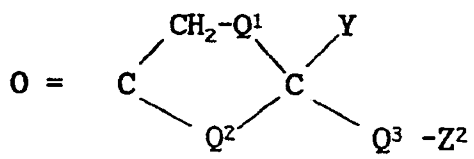

II

is reacted with an appropriate aryltitanium trialkoxide or arylzirconium trialkoxide and then the intermediate, the tertiary alcohol according to formula I

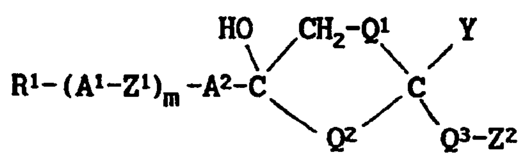

I

is dehydrated, wherein Y, $Z^2$, $Q^3$, $A^2$, m, $Z^1$, $A^1$ and $R^1$ in the formulae I and II have the meanings specified in Claim I, and

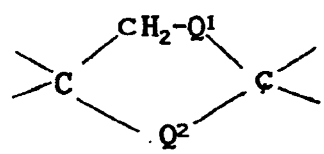

in an alicyclic fragment.

**Revendications**

1. Composés alicycliques de formule IV :

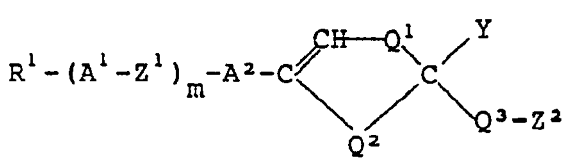

IV

dans laquelle :

$R^1$ représente un halogène ou un groupe alkyle en $C_2$-$C_{10}$ dans lequel un ou deux groupes $CH_2$ non voisins peuvent être remplacés par des atomes d'oxygène et/ou des groupes –CO– et/ou des groupes –CO–O– et/ou des groupes –CH=CH–,

$A^1$ représente un groupe 1,4-phénylène ou 1,4-cyclo-hexylène non substitué ou mono- ou polysubstitué par des halogènes et/ou des groupes $CH_3$,

$Z^1$ représente $-CH_2CH_2-$, $-CH_2O-$, $-OCH_2-$ ou une liaison simple,

m est égal à 0, 1 ou 2,

$A^2$ représente un groupe 1,4-phénylène non substitué ou mono- ou polysubstitué par des halogènes et/ou des groupes $CH_3$,

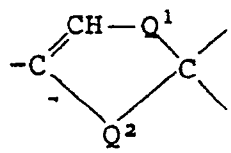

représente un fragment alicyclique,

$Z^2$ représente $-COOR$ ou $-CN$,

$Q^3$ représente un groupe alkylène en $C_1$-$C_{15}$, alkylidène en $C_2$-$C_{15}$ ou une liaison simple,

Y représente H, CN ou R, et

R représente un groupe alkyle en $C_1$-$C_{15}$, sous réserve que $Q^2$ et $Q^3$ ne peuvent représenter tous deux, simultanément, une liaison simple.

2. Composés selon la revendication 1, dans lesquels m = Ø.

3. Composés selon la revendication 1, caractérisés en ce que le fragment alicyclique est un noyau cyclohexène.

4. Composés selon la revendication 1, dans lesquels $A^2$ représente un groupe 1,4-phénylène substitué par le fluor.

5. Composés selon la revendication 1, dans lesquels Y représente H et $Z^2$ représente $-COOR$.

6. Procédé de préparation des composés de formule IV de la revendication 1, caractérisé en ce que l'on fait réagir un composé de formule II :

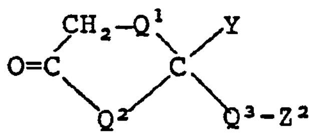

II

avec un trialcoolate d'aryltitane ou un trialcoolate d'arylzirconium correspondant, ce qui donne en produit intermédiaire l'alcool tertiaire de formule I :

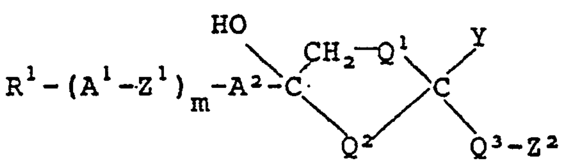

I

qu'on soumet ensuite à déshydratation,

les symboles Y, $Z^2$, $Q^3$, $A^2$, m, $Z^1$, $A^1$ et $R^1$ ayant dans les formules I et II les significations indiquées dans la revendication 1, et

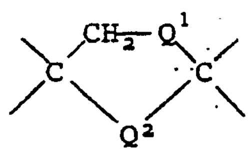

représente un fragment alicyclique.